# EUROPÄISCHE PATENTANMELDUNG

(11) **EP 2 905 495 A1**
(43) Veröffentlichungstag der Anmeldung: **12.08.2015**
(21) Anmeldenummer: 15152775.1
(22) Anmeldetag: 28.01.2015
(51) Int. Cl.: F16D 25/08, F16J 15/16, F16J 15/32

(54) **Dichtungsanordnung**

(30) Priorität: 06.02.2014 DE 102014202141
(71) Anmelder: Schaeffler Technologies AG & Co. KG, 91074 Herzogenaurach (DE)
(72) Erfinder: Jacky, Michel, 67250 Hunspach (FR)

(57) **Zusammenfassung**

Die Erfindung betrifft eine Dichtungsanordnung, insbesondere für einen Nehmerzylinder eines hydraulischen Ausrücksystems einer Reibungskupplung eines Kraftfahrzeuges, welcher ein konzentrisch zu einer Getriebeeingangswelle angeordnetes Zylindergehäuse und eine in einer Längsbohrung des Zylindergehäuses radial beabstandet zur Bildung eines kreisringförmigen Druckraums angeordnete Führungshülse aufweist, wobei in dem Druckraum ein Ringkolben axial verschiebbar geführt ist, an welchem druckraumseitig zumindest eine von einem Dichtungsträger aufgenommene Dichtung angeordnet ist, wobei zwischen Dichtungsträger und Zylindergehäuse ein äußerer Ringspalt und zwischen Dichtungsträger und Führungshülse ein innerer Ringspalt ausgebildet ist. Erfindungsgemäß ist zwischen Dichtungsträger und Dichtung zumindest ein eine Verringerung des äußeren Ringspalts und/oder des inneren Ringspalts bewirkendes Stützelement angeordnet.

## Beschreibung

Die Erfindung bezieht sich auf eine Dichtungsanordnung, insbesondere für einen Nehmerzylinder eines hydraulischen Ausrücksystems einer Reibungskupplung eines Kraftfahrzeuges, welcher ein konzentrisch zu einer Getriebeeingangswelle angeordnetes Zylindergehäuse und eine in einer Längsbohrung des Zylindergehäuses radial beabstandet zur Bildung eines kreisringförmigen Druckraums angeordnete Führungshülse aufweist, wobei in dem Druckraum ein Ringkolben axial verschiebbar geführt ist, an welchem druckraumseitig zumindest eine von einem Dichtungsträger aufgenommene Dichtung angeordnet ist.

Bei konzentrischen Nehmerzylindern (CSC) steht ein ringförmiger Kolben in einem engen Kontakt mit einer zwischen einer inneren und einer äußeren Zylinderwand eines Zylindergehäuses definierten Bohrung. Die innere Zylinderwand wird häufig auch von einer konzentrisch um die Getriebeeingangswelle angeordneten Führungshülse gebildet. Es wird somit eine ringförmige Betätigungskammer geschaffen, in die ein Fluid eingeleitet werden kann, um den Kolben gegenüber dem Zylinder/der Führungshülse zu verschieben und so ein am Kolben oder Zylinder angeordnetes Ausrücklager zu bewegen.

Derartige ringförmig ausgebildete Nehmerzylinder (auch als Zentralausrücker bezeichnet) setzen eine ringförmige Abdichtung voraus, die üblicherweise durch einen aus einem elastischen Werkstoff bestehenden Dichtungsring realisiert wird. Da diese Dichtungsringe nur eingeschränkt an andere Bauteile anbindbar sind, wird zur Verbindung mit dem Kolben des Nehmerzylinders an den Dichtungsring meist ein Halteelement angeformt oder der Dichtungsring wird in einem mit dem Kolben verbindbaren Halteelement bzw. Dichtungsträger aufgenommen. Dieser hat die Aufgabe, eine Fixierung der Dichtung mit dem mittels eines Druckmittels innerhalb einer beispielsweise von dem Zylindergehäuse und einer Führungshülse gebildeten ringförmigen Längsbohrung bewegbaren Kolben zu verwirklichen. Dabei besteht üblicherweise ein Ringspalt zwischen Ringkolben/Dichtungsträger und Zylindergehäuse bzw. Ringkolben/Dichtungsträger und Führungshülse. Insbesondere bei höheren Arbeitsdrücken im Betrieb des Nehmerzylinders kann es hierzu Spaltextrusionen kommen. Das bedeutet, dass Teile der Dichtung in den Spalt zwischen Ringkolben/Dichtungsträger und Nehmerzylindergehäuse bzw. Ringkolben/Dichtungsträger und Führungshülse gepresst werden. Das führt wiederum zu einer Abnutzung oder Beschädigung der Dichtung und somit zu einer Störung der Funktion des Nehmerzylinders oder gar zu dessen Ausfall.

Um eine derartige Spaltextrusion zu vermeiden oder zumindest zu minimieren, sind aus dem Stand der Technik vielfältige Lösungen bekannt.

In der DE 199 49 205 B4 wird beispielsweise ein hydraulisch betätigbares Ausrücksystem beschrieben, welches einen Nehmerzylinder mit einem Ringkolben aufweist, der in einem kreisringförmigen Druckraum axial verschiebbar geführt ist. Eine druckraumseitig angeordnete Dichtung ist mit einem kreisringförmig gestalteten sowie aus einem Blechband spanlos gefertigten Dichtungsträger an dem Ringkolben befestigt. Über eine entsprechende geometrische Gestaltung des metallischen Dichtungsträgers, wodurch beispielsweise die Abstützfläche bzw. die Stirnfläche der Dichtung vergrößert wird, soll hier eine Spaltextrusion reduziert werden.

Bei einem in der DE 197 24 988 A1 offenbarten hydraulischen Ausrücksystem mit einem konzentrisch zu einer Antriebswelle angeordneten Nehmerzylinder und einem in einem kreisringförmigen Druckraum axial verschiebbaren Ringkolben ist mit letzterem ein beispielsweise aus Kunststoff hergestellter Dichtungsträger formschlüssig verbunden. Dieser nimmt wiederum ein elastisches Dichtungselement formschlüssig auf. Im Bereich des Dichtungselementes sind am Dichtungsträger Versteifungselemente (Armierungen) angeordnet, wodurch eine mangelnde Maßhaltigkeit des Kunststoffteils ausgeglichen und das Spaltmaß zwischen dem Dichtungsträger und der Dichtlippenlaufbahn an der Führungshülse bzw. an dem Zylindergehäuse minimiert werden soll.

Mit einer in der EP 1 970 589 A2 aufgezeigten Lösung soll ebenfalls eine Verringerung der Spaltextrusion erzielt werden. In einem konzentrischen Nehmerzylinder ist in einem zwischen der Innenfläche des Zylindergehäuses und der zylindrischen Außenfläche der Führungshülse bestehenden kreisringförmigen Druckraum ein Ringkolben axial verschiebbar geführt. Druckraumseitig ist der Ringkolben mit einer radial gespreizte Dichtlippen aufweisenden Dichtung versehen, welche über einen Dichtungsträger mit dem Kolben verbunden ist. Dabei kommt die radial äußere Lippe an dem Innenumfang des Zylindergehäuses und die radial innere Lippe an dem Außenumfang der Führungshülse dichtend zur Anlage. Der formschlüssig mit dem Ringkolben verbundene Dichtungsträger ist hier aus einem Kunststoff (Thermoplast oder verstärktes Polyamid) gefertigt und weist zudem noch eine Armierung in Form eines unter Druck elastischen und insbesondere in radialer Richtung verformbaren Werkstoffes, z. B. einer Glasfaserverstärkung oder eines Stahlringes, auf. Der Dichtungsträger umgreift dabei die aus einem Elastomer bestehende Dichtung teilweise und reduziert so die Kontaktfläche der Dichtung zu Zylindergehäuse und Führungshülse, wodurch die Reibung und somit der Verschleiß der Dichtung verringert wird. Bei Druckbeaufschlagung des Druckraumes wird der druckraumseitige Teil des Dichtungsträgers in radialer Richtung aufgeweitet/gespreizt, wodurch ein zwischen Ringkolben und Gehäuse und/oder zwischen Ringkolben und Führungshülse vorhandener Ringspalt verkleinert wird.

Bei den bekannten Dichtungsanordnungen finden die Wärmeausdehnungskoeffizienten der verwendeten Werkstoffe keine Beachtung. Bei Temperaturveränderungen kommt es aber in Abhängigkeit von den eingesetzten Werkstoffen zu Volumen- oder Längenveränderungen bei den einzelnen Bauteilen des Nehmerzylinders. Meist wird eine Führungshülse aus Aluminium oder Stahl verwendet, während der Kolben aus einem Kunststoff besteht. Der an dem Kolben befestigte Dichtungsträger kann aus Metall oder Kunststoff gefertigt sein. Aus den unterschiedlichen Wärmeausdehnungsverhalten der Werkstoffe ergeben sich die notwendigen Spiele, um beispielsweise ein Festschrumpfen des Kolbens auf der Führungshülse bei tiefen Temperaturen zu vermeiden. Diese Spiele müssen auch nach außen hin, zwischen Kolben und Gehäuse, berücksichtigt werden, um insbesondere bei hohen Temperaturen ein Anlaufen des Kolbens oder des Dichtungsträgers am Gehäuse zu vermeiden. In der Praxis ergeben sich daher vergleichsweise große Spiele zwischen Kolben bzw. Dichtungsträger und Führungshülse und Kolben bzw. Dichtungsträger und Gehäuse und somit eine Spaltextrusion begünstigende Spalten.

Bei der Verwendung eines aus Metall bestehenden Dichtungsträgers besteht immer ein relativ großer Spalt zum Druckraum. Das ist dadurch begründet, dass aufgrund des komplexen Herstellungsprozesses der metallische Dichtungsträger große Toleranzen aufweist. Insbesondere bei hohen Betriebsdrücken kann es deshalb zu Spaltextrusionen des Dichtringes kommen.

Verglichen mit Metallen besitzen Kunststoffe eine geringe Maßbeständigkeit. Deshalb ermöglicht ein aus Kunststoff bestehender Dichtungsträger einen besseren Toleranzausgleich bzw. kann mit kleineren Toleranzen gefertigt werden. Aufgrund der Flexibilität des Kunststoffs könnte deshalb durch eine Verformung des Dichtungsträgers der Spalt zum Druckraum verringert werden.

Allerdings können auch bei dem Einsatz eines aus Kunststoff gefertigten Dichtungsträgers nachteilige Auswirkungen eintreten: Da die Werkstoffe Metall und Kunststoff unterschiedliche Wärmeausdehnungskoeffizienten aufweisen, kann es bei einer Temperaturänderung insbesondere bei Kupplungsnehmerzylindern mit metallischen Laufflächen an Zylindergehäuse bzw. Führungshülse entweder zu einer weiteren Vergrößerung des Spaltes kommen oder der Kunststoff-Dichtungsträger verklemmt sich aufgrund der zu starken Verringerung des Spaltes. Um den Einfluss einer Temperaturänderung auf die Spaltgröße zu minimieren, wurden deshalb schon Lösungen bekannt, welche vorsehen, die einzelnen Bauteile des Nehmerzylinders aus Werkstoffen mit einem ähnlichen Wärmeausdehnungskoeffizienten zu fertigen.

So wird in der DE 103 58 836 A1 ein hydraulisches System anhand einer als Zentralausrücker ausgebildeten Kupplungsausrückvorrichtung beschrieben, bei welcher der zwischen Kolben und Gehäuse bzw. Kolben und Führungshülse vorhandene Spalt gering gehalten wird, indem die Materialien des Gehäuses, der Führungshülse, des Kolbens und des mit dem Kolben verbundenen Dichtungsträgers so aufeinander abgestimmt sind, dass diese einen möglichst gleichen Wärmeausdehnungskoeffizienten besitzen. Die Abmessungen des Kolbens und des Dichtungsträgers in radialer Richtung sind dabei so auf das Außenmaß der Führungshülse und das Innenmaß des Gehäuses abgestimmt, dass unter allen Bedingungen, insbesondere auch unter Temperaturveränderungen, ein spielbehaftetes Gleiten des Kolbens gegeben ist.

Eine derartige Ausführung eines Zentralausrückers bedeutet aber eine kostenaufwendige und in der Praxis schwer zu realisierende Lösung.

Die Aufgabe der Erfindung besteht deshalb darin, eine Dichtungsanordnung, insbesondere für einen Nehmerzylinder eines hydraulischen Ausrücksystems einer Reibungskupplung eines Kraftfahrzeuges, vorzuschlagen, mit welcher bei relativ einfacher und kostengünstiger Herstellung eine Spaltextrusion vermieden wird.

Die Aufgabe wird mit den Merkmalen des ersten Patentanspruchs gelöst. Weitere vorteilhafte Ausgestaltungen der Erfindung ergeben sich aus den Unteransprüchen.

Bei einer Dichtungsanordnung, insbesondere für einen Nehmerzylinder eines hydraulischen Ausrücksystems einer Reibungskupplung eines Kraftfahrzeuges, welcher ein konzentrisch zu einer Getriebeeingangswelle angeordnetes Zylindergehäuse und eine in einer Längsbohrung des Zylindergehäuses radial beabstandet zur Bildung eines kreisringförmigen Druckraums angeordnete Führungshülse aufweist, wobei in dem Druckraum ein Ringkolben axial verschiebbar geführt ist, an welchem druckraumseitig zumindest eine von einem Dichtungsträger aufgenommene Dichtung angeordnet ist, wobei zwischen Dichtungsträger und Zylindergehäuse ein äußerer Ringspalt und zwischen Dichtungsträger und Führungshülse ein innerer Ringspalt ausgebildet ist, ist erfindungsgemäß zwischen Dichtungsträger und Dichtung zumindest ein eine Verringerung des äußeren Ringspalts und/oder des inneren Ringspalts bewirkendes Stützelement angeordnet.

Dabei ist das zumindest eine Stützelement zwischen dem Dichtungsträger und einer mit dem Zylindergehäuse einen äußeren Dichtbereich bildenden Dichtlippe und/oder zwischen dem Dichtungsträger und einer mit der Führungshülse einen inneren Dichtbereich bildenden Dichtlippe der Dichtung angeordnet.

In vorteilhafter Weise ist das Stützelement von zwei separaten Stützringen gebildet. Vorzugsweise ist in radialer Richtung der eine (äußere) Stützring zwischen dem Zylindergehäuse und der Dichtung und der andere (innere) Stützring zwischen der Führungshülse und der Dichtung angeordnet. In einer vorteilhaften Ausgestaltung ist der radial außen angeordnete Stützring in einer äußeren Ringnut und der radial innen angeordnete Stützring in einer inneren Ringnut der Dichtung aufgenommen. Vorzugsweise liegt der äußere Stützring an einem radialen Abschnitt des Dichtungsträgers und einer an der äußeren Dichtlippe ausgebildeten Stützfläche und der innere Stützring an einem radialen Abschnitt des Dichtungsträgers und einer an der inneren Dichtlippe ausgebildeten Stützfläche an. In einer vorteilhaften Ausbildung weisen/weist der äußere Stützring und/oder der innere Stützring eine im Querschnitt symmetrische Ausbildung in Bezug auf den Dichtungsträger und die Dichtung auf.

Dabei besteht/bestehen in einer bevorzugten Ausführungsform das Stützelement/die Stützringe aus einem verschleißarmen Kunststoff und ist/sind unter Temperatureinwirkung verformbar.

Die Erfindung wird nachstehend anhand von Ausführungsbeispielen und zugehöriger Zeichnungen näher erläutert. Es zeigen:
Fig. 1 eine schematische Darstellung einer erfindungsgemäßen Dichtungsanordnung in einem Teilausschnitt eines konzentrischen Nehmerzylinders,
Fig. 2 eine vergrößerte Detailansicht der erfindungsgemäßen Dichtungsanordnung gemäß einem ersten Ausführungsbeispiel,
Fig. 3 eine vergrößerte Detailansicht der erfindungsgemäßen Dichtungsanordnung gemäß einem zweiten Ausführungsbeispiel.

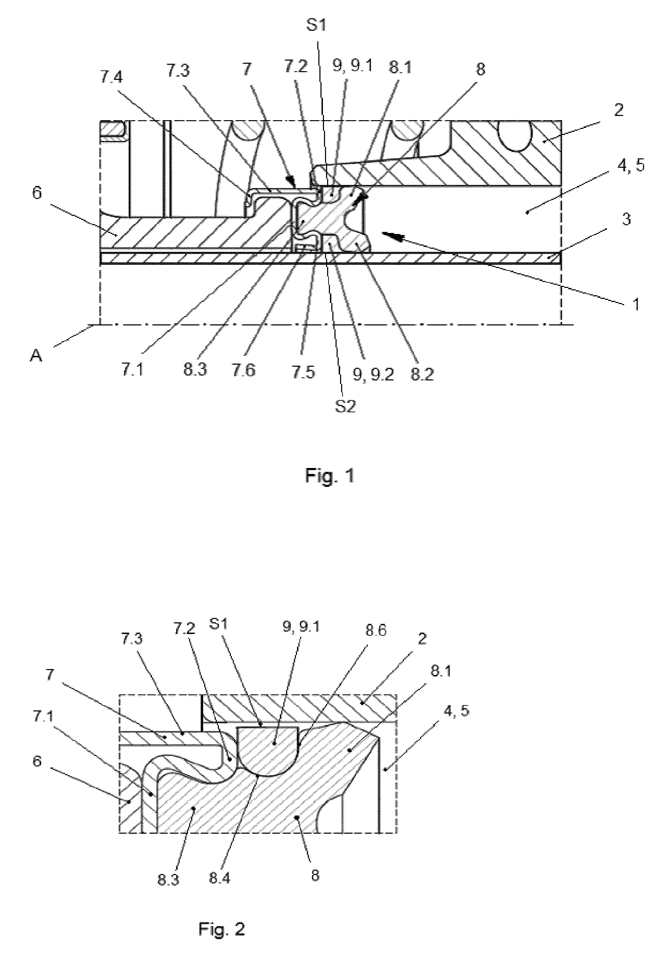

Fig. 1 zeigt eine schematische Darstellung einer erfindungsgemäßen Dichtungsanordnung 1 eines konzentrischen Nehmerzylinders, welcher hier nur in einem Teilausschnitt gezeigt ist. Der konzentrisch um eine nur schematisch anhand einer Rotationsachse/Längsachse A dargestellten Getriebeeingangswelle angeordnete Nehmerzylinder weist ein Zylindergehäuse 2 mit einer zylindrischen Innenfläche sowie eine Führungshülse 3 mit einer zylindrischen Außenfläche auf. Zwischen der Innenfläche des Zylindergehäuses 2 und der Außenfläche der Führungshülse 3 ist ein Ringraum 4 eingeschlossen, in dem mittels einer hier nicht dargestellten Zuleitung eines Druckfluids ein Druckraum 5 ausgebildet ist. Ein Ringkolben 6 ist in diesem axial verschiebbar angeordnet. An dem druckraumseitigen Ende des Ringkolbens 6 ist ein Dichtungsträger 7 befestigt, der eine Dichtung 8 aufnimmt. Der hier aus einem Metall gefertigte Dichtungsträger 7 ist in an sich bekannter Weise mit dem Ringkolben 6 verbunden. Die Dichtung 8 ist als Lippendichtung mit zwei V-förmig radial gespreizt zueinander angeordneten Dichtlippen 8.1, 8.2 ausgebildet. Dabei realisiert die radial äußere Dichtlippe 8.1 einen an der Innenfläche des Zylindergehäuses 2 anliegenden äußeren Dichtbereich und die radial innere Dichtlippe 8.2 einen an der Außenfläche der Führungshülse 3 anliegenden inneren Dichtbereich. Die zylindrische Innenfläche des Zylindergehäuses 2 und die zylindrische Außenfläche der Führungshülse 3 bilden hierbei Laufflächen aus, an denen die Dichtlippen 8.1, 8.2 während der Bewegung des Ringkolbens 6 entlang gleiten. Meist sind aufgrund der guten Gleiteigenschaften metallische Dichtungslaufflächen vorgesehen. Der Dichtungsträger 7 weist dichtungsseitig eine Ausnehmung 7.1 auf, die sich in Richtung des Ringkolbens 6 radial aufweitet und dabei ein trapezförmiges Innenprofil zur Aufnahme eines komplementär ausgebildeten Dichtungsfußes 8.3 der Dichtung 8 aufweist und somit eine formschlüssige Befestigung der Dichtung 8 am Dichtungsträger 7 bewirkt. Als Befestigung des Dichtungsträgers 7 am Ringkolben 6 dient ein sich an einen radialen Abschnitt 7.2 außen anschließender, axial von der Dichtung 8 weg gerichteter, Fortsatz 7.3, der in an sich bekannter Weise einen endseitigen Abschnitt des Ringkolbens 6 radial außen konzentrisch umgreift und mittels einer radial nach innen gerichteten Bördelung 7.4 mit diesem verbunden ist. Die Befestigung des Dichtungsträgers 7 an dem Ringkolben 6 kann aber auch auf andere Art und Weise erfolgen. Auf der zur Führungshülse 3 gerichteten Seite weist der Dichtungsträger 7 einen weiteren radialen Abschnitt 7.5 auf, an den sich ein axialer, zum Ringkolben 6 gerichteter, Fortsatz 7.6 anschließt. Dabei sind zwischen dem axialen Fortsatz 7.3 und der Innenfläche des Zylindergehäuses 2 ein Ringspalt S1 und zwischen dem axialen Fortsatz 7.6 und der Außenfläche der Führungshülse 3 ein Ringspalt S2 vorhanden.

Bei den bekannten Lösungen reicht dieser Ringspalt S1, S2 in axialer Richtung üblicherweise bis an die jeweilige Dichtlippe 8.1, 8.2 heran und ermöglicht dadurch eine Spaltextrusion.

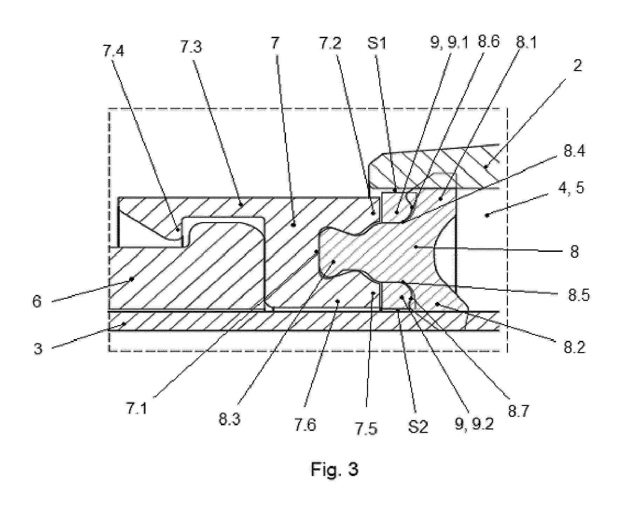

Gemäß der Erfindung ist zwischen dem Dichtungsträger 7 und der Dichtung 8 ein Stützelement 9 vorgesehen, das vorzugsweise aus zwei separaten Stützringen 9.1, 9.2 gebildet ist. Zur Aufnahme des ersten (äußeren) Stützringes 9.1 weist die Dichtung 8 hierbei eine äußere Ringnut 8.4 und zur Aufnahme des zweiten (inneren) Stützringes 9.2 eine innere Ringnut 8.5 auf. Der äußere Stützring 9.1 liegt in axialer Richtung einerseits an einer in etwa radial verlaufenden Stützfläche 8.6, die an der vom Druckraum 5 abgewandten Rückseite der äußeren Dichtlippe 8.1 ausgebildet ist, an und stützt sich andererseits an dem Abschnitt 7.2 des Dichtungsträgers 7 ab. Analog dazu liegt der innere Stützring 9.2 an einer in etwa radial verlaufenden, an der Rückseite der Dichtlippe 8.2 ausgebildeten, Stützfläche 8.7 und an dem in etwa radial verlaufenden Abschnitt 7.5 des Dichtungsträgers 7 an. (Einige der hier angeführten Bezugszeichen sind nur in der vergrößerten Darstellung der Fig. 2 und Fig. 3 angetragen.)

Die beiden Stützringe 9.1, 9.2 bestehen vorzugsweise aus einem verschleißarmen Kunststoff und befinden sich in einem geringen radialen Abstand zu den jeweiligen Dichtungslaufflächen von Zylindergehäuse 2 und Führungshülse 3. Aufgrund der bereits weiter oben erwähnten Eigenschaften des Kunststoffs können die Stützringe 9.1, 9.2 mit geringen Toleranzen gefertigt werden. Bei Temperaturveränderungen können die Stützringe 9.1, 9.2 sich unabhängig von dem Dichtungsträger 7 verformen oder verschieben und somit zumindest den zwischen dem Dichtungsträger 7 und der Dichtung 8 befindlichen Teil des Ringspaltes S1 bzw. des Ringspaltes S2 verschließen. Dabei können die beiden Stützringe 9.1, 9.2 durchaus auch miteinander gelenkig verbunden sein.

In Fig. 2 ist eine vergrößerte Darstellung einer Detailansicht der erfindungsgemäßen Dichtungsanordnung 1 mit dem metallischen Dichtungsträger 7 gemäß Fig. 1 gezeigt, wobei hier nur ein dem äußeren Stützring 9.1 zugeordneter Ausschnitt der Dichtungsanordnung 1 dargestellt ist. Die Anordnung des inneren (hier nicht gezeigten) Stützrings 9.2 ist analog vorgesehen. Es ist der minimale Ringspalt S1 zwischen dem äußeren Stützring 9.1 und dem Zylindergehäuse 2 zu erkennen. Das gleiche trifft natürlich auf die führungshülsenseitige Anordnung des inneren Stützrings 9.2 und dem Ringspalt S2 zu. Gegenüber dem metallischen Dichtungsträger 7 besitzen die Stützringe 9.1, 9.2 eine bessere Flexibilität und Verformbarkeit aufgrund des verwendeten Kunststoffes. Bei Temperaturveränderungen verformen sich die Kunststoff-Stützringe 9.1, 9.2 unabhängig von dem Dichtungsträger 7 und füllen so die Ringspalten S1, S2 mit ihrem Werkstoff aus.

Die Geometrie der Stützringe 9.1, 9.2 kann dabei unterschiedlich sein. So zeigt Fig.2 eine im Querschnitt symmetrisch zu einer senkrecht zu der Längsachse A gerichteten Achse ausgebildeten Geometrie der Stützringe 9.1, 9.2. Eine Prüfung bezüglich der Einbaurichtung erübrigt sich somit. Der jeweilige Stützring 9.1, 9.2 kann so in beide Richtungen montiert werden. Da die Dichtung 8 mit einer komplementär ausgebildeten Geometrie versehen ist - Stützfläche 8.6, 8.7 bzw. Ringnut 8.4, 8.5 - können die Stützringe 9.1, 9.2 an der Dichtung 8 vormontiert werden.

Fig. 3 zeigt eine vergrößerte Darstellung einer Detailansicht der erfindungsgemäßen Dichtungsanordnung 1 mit dem Dichtungsträger 7, der hier aus einem Kunststoff gefertigt ist. Die konstruktive Ausführung ist ähnlich der des Metall-Dichtungsträgers 7. Auch die Wirkungsweise ist analog wie bei der in Fig. 2 beschriebenen Variante. Für Bauteile mit gleicher Funktion sind deshalb gleiche Bezugszeichen verwendet. Da die separaten Stützringe 9.1, 9.2 sich unabhängig von dem Dichtungsträger 7 verformen und verschieben können, kann auch hier der Dichtungsträger 7 mit einem größeren Ringspalt S1, S2 zu Zylindergehäuse 2 und Führungshülse 3 ausgeführt sein. Eine Temperaturerhöhung und eine damit verbundene Volumenausdehnung des Kunststoff-Dichtungsträgers 7 führt somit nicht gleich zu einem Verklemmen mit dem Zylindergehäuse 2 oder der Führungshülse 3. Eine Spaltextrusion wird aber trotzdem verhindert, da die Stützringe 9.1, 9.2 mit ihrem Werkstoff den Ringspalt S1, S2 ausfüllen.

Die Ausbildung des Stützelementes 9 und somit auch der erfindungsgemäßen Dichtungsanordnung 1 besitzt gegenüber den bekannten Lösungen gleich zwei Vorteile:
Aufgrund des verwendeten Kunststoffs können die beiden Stützringe 9.1, 9.2 maßgenau gefertigt werden, so dass sie bereits beim Einbau in den Nehmerzylinder einen relativ kleinen Ringspalt S1 bzw. S2 aufweisen. Aufgrund der Anordnung der separaten Stützringe 9.1, 9.2, welche sich unabhängig voneinander sowie unabhängig von dem beispielsweise aus Aluminium, Stahl oder Kunststoff hergestellten Dichtungsträger 7 verformen und verschieben können, werden die Ringspalten S1, S2 - beispielsweise bei einer Temperaturänderung - minimiert, ohne dass dies Einfluss auf die Gleitfähigkeit von Ringkolben 6 bzw. Dichtungsträger 7 entlang der Führungshülse 3 und des Zylindergehäuse 2 hat. Dabei können Dichtungsträger 7, Stützelement 9 sowie die Dichtungslaufbahnen an Führungshülse 3 und Zylindergehäuse 2 unterschiedliche oder gleiche Wärmeausdehnungskoeffizienten besitzen.

Der Nehmerzylinder bzw. das Kupplungsausrücksystem können somit auch bei höheren Betriebsdrücken, beispielsweise bei 45 bar, eingesetzt werden, ohne dass es zu einem schnellen Verschleiß der Dichtung 8 und dadurch bedingten Ausfällen des Systems kommt. Mit der erfindungsgemäßen Dichtungsanordnung 1 konnte ein optimiertes Abdichtungssystem geschaffen werden, das insbesondere auch bei mit höheren Betriebsdrücken arbeitenden Nehmerzylindern mit metallischen Laufflächen von Zylindergehäuse und/oder Führungshülse einsetzbar ist.

### Bezugszeichenliste

- 1: Dichtungsanordnung
- 2: Zylindergehäuse
- 3: Führungshülse
- 4: Ringraum
- 5: Druckraum
- 6: Ringkolben
- 7: Dichtungsträger
- 7.1: Ausnehmung
- 7.2: radialer Abschnitt
- 7.3: axialer Fortsatz
- 7.4: Bördelung
- 7.5: radialer Abschnitt
- 7.6: axialer Fortsatz
- 8: Dichtung/Lippendichtung
- 8.1: äußere Dichtlippe
- 8.2: innere Dichtlippe
- 8.3: Dichtungsfuß
- 8.4: Ringnut
- 8.5: Ringnut
- 8.6: Stützfläche
- 8.7: Stützfläche
- 9: Stützelement
- 9.1: äußerer Stützring
- 9.2: innerer Stützring
- A: Rotationsachse/Längsachse
- S1: äußerer Ringspalt
- S2: innerer Ringspalt

## Patentansprüche

1. Dichtungsanordnung (1), insbesondere für einen Nehmerzylinder eines hydraulischen Ausrücksystems einer Reibungskupplung eines Kraftfahrzeuges, welcher ein konzentrisch zu einer Getriebeeingangswelle angeordnetes Zylindergehäuse (2) und eine in einer Längsbohrung des Zylindergehäuses (2) radial beabstandet zur Bildung eines kreisringförmigen Druckraums (5) angeordnete Führungshülse (3) aufweist, wobei in dem Druckraum (5) ein Ringkolben (6) axial verschiebbar geführt ist, an welchem druckraumseitig zumindest eine von einem Dichtungsträger (7) aufgenommene Dichtung (8) angeordnet ist, wobei zwischen Dichtungsträger (7) und Zylindergehäuse (2) ein äußerer Ringspalt (S1) und zwischen Dichtungsträger (7) und Führungshülse (3) ein innerer Ringspalt (S2) ausgebildet ist, **dadurch gekennzeichnet, dass** zwischen Dichtungsträger (7) und Dichtung (8) zumindest ein eine Verringerung des äußeren Ringspalts (S1) und/oder des inneren Ringspalts (S2) bewirkendes Stützelement (9) angeordnet ist.

2. Dichtungsanordnung (1) nach Anspruch 1, **dadurch gekennzeichnet, dass** das zumindest eine Stützelement (9) zwischen dem Dichtungsträger (7) und einer mit dem Zylindergehäuse (2) einen äußeren Dichtbereich bildenden Dichtlippe (8.1) und/oder zwischen dem Dichtungsträger (7) und einer mit der Führungshülse (3) einen inneren Dichtbereich bildenden Dichtlippe (8.2) der Dichtung (8) angeordnet ist.

3. Dichtungsanordnung (1) nach Anspruch 1 oder 2, **dadurch gekennzeichnet, dass** das Stützelement (9) von zwei separaten Stützringen (9.1, 9.2) gebildet ist.

4. Dichtungsanordnung (1) nach Anspruch 3, **dadurch gekennzeichnet, dass** in radialer Richtung der eine (äußere) Stützring (9.1) zwischen dem Zylindergehäuse (2) und der Dichtung (8) und der andere (innere) Stützring (9.2) zwischen der Führungshülse (3) und der Dichtung (8) angeordnet ist.

5. Dichtungsanordnung (1) nach Anspruch 3 oder 4, **dadurch gekennzeichnet, dass** der radial außen angeordnete Stützring (9.1) in einer äußeren Ringnut (8.4) und der radial innen angeordnete Stützring (9.2) in einer inneren Ringnut (8.5) der Dichtung (8) aufgenommen ist.

6. Dichtungsanordnung (1) nach einem der Ansprüche 3 bis 5, **dadurch gekennzeichnet, dass** der äußere Stützring (9.1) an einem radialen Abschnitt (7.2) des Dichtungsträgers (7) und einer an der äußeren Dichtlippe (8.1) ausgebildeten Stützfläche (8.6) und der innere Stützring (9.2) an einem radialen Abschnitt (7.5) des Dichtungsträgers (7) und einer an der inneren Dichtlippe (8.2) ausgebildeten Stützfläche (8.7) anliegt.

7. Dichtungsanordnung (1) nach einem der Ansprüche 3 bis 6, **dadurch gekennzeichnet, dass** der äußere Stützring (9.1) und/oder der innere Stützring (9.2) eine im Querschnitt symmetrische Ausbildung in Bezug auf den Dichtungsträger (7) und die Dichtung (8) aufweisen/aufweist.

8. Dichtungsanordnung (1) nach einem der Ansprüche 1 bis 7, **dadurch gekennzeichnet, dass** das Stützelement (9)/die Stützringe (9.1, 9.2) aus einem verschleißarmen Kunststoff besteht/bestehen.

9. Dichtungsanordnung (1) nach einem der Ansprüche 1 bis 8, **dadurch gekennzeichnet, dass** das Stützelement (9)/die Stützringe (9.1, 9.2) unter Temperatureinwirkung verformbar ist/sind.
